# EUROPÄISCHE PATENTANMELDUNG

(11) **EP 1 632 785 A1**
(43) Veröffentlichungstag der Anmeldung: **08.03.2006**
(21) Anmeldenummer: 05018013.2
(22) Anmeldetag: 19.08.2005
(51) Int. Cl.: G01S 1/70, G01S 5/16, G01S 11/12

(54) **Positionsmessgerät auf Laserbasis**

(30) Priorität: 25.08.2004 DE 102004041278
(71) Anmelder: Prüftechnik Dieter Busch AG, 85737 Ismaning (DE)
(72) Erfinder: Konetschny, Volker, 81241 München (DE)

(57) **Zusammenfassung**

Das Positionsmeßgerät zur Bestimmung zweidimensionaler Koordinaten sieht einen in einer horizontalen Ebene gleichmäßig umlaufenden Laserstrahl vor, der auf ein optoelektronisches Target auftreffen kann. Die durch das Target bestimmbaren Parameter Impulslänge und -phasenlage ermöglichen die Berechnung der gesuchten Koordinaten (z.B. als Polarkoordinaten).

## Beschreibung

Die Erfindung betrifft ein Positionsmeßgerät auf Laserbasis.

Bekannte Geäte ähnlicher Art sind bekannt unter dem Gattungsbegriff "Total Station" und werden von renommierten Firmen weltweit vertrieben.

Da die bekannten Geräte vergleichsweise hohen Investitionsbedarf voraussetzen, ist es Aufgabe der Erfindung, ein wesentlich preisgünstigeres Gerät zu schaffen, welches für weniger stringente 2 - oder 3 dimensionale Vermessungsaufgaben eingesetzt werden kann. Solche Vermessungsaufgaben sind in diversen Branchen zu lösen, zum Beispiel bei Planitätsmessungen im Werkzeugmaschinenbau.

Die genannte Aufgabe wird gelöst durch ein Gerät gemäß den Merkmalen der untengenannten Patentansprüche.

Die Erfindung wird im folgenden anhand der Zeichnung erläutert.

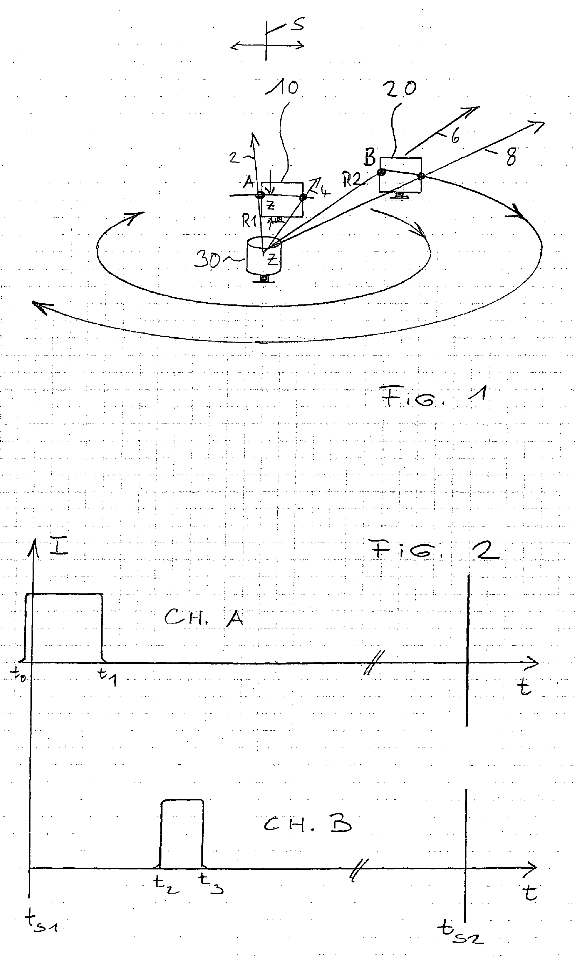

In Fig. 1 wird in schematischer Weise ein in einer horizontalen Ebene ZAB umlaufender Laserstrahl gezeigt. Hierzu wird ein Laserstrahlgenerator 30 verwendet, welcher eine motorische Einrichtung (nicht gezeigt) aufweist, mit dem ein Laserstrahl in umlaufende Bewegung um ein Zentrum Z versetzt werden kann. Auf diese Weise kommt der Laserstrahl sukzessive in z.B. Positionen 2, 4, 6 und 8 in einer zugehörigen, z.B. praktisch horizontal liegenden Ebene, welche sehr plan ist. Die motorische Einrichtung ist so ausgeführt, daß eine sehr konstante Winkelgeschwindigkeit des Lasers bereitgestellt werden kann, so daß z.B. Abweichungen des Laserstrahles von einer Ist-Winkellage relativ zu einer Soll-Winkellage zu jedem gegebenen Zeitpunkt lediglich z.B. 10E-4 rad (100 Mikrorad) beträgt. Zugehörige Komponenten für eine solche motorische Einrichtung sind an sich bekannt. In periodisch exakt wiederkehrenden Zeiten kann der Laserstahl daher eine Referenzmarke S überstreichen.

Zur Bestimmung der x- und y- Position von z.B. einer Meßlatte, eines Meßsensors oder dgl, in einer zu überprüfenden Meß-Ebene wird gemäß der Erfindung für eine jede solche Meßlatte o.dgl. ein optoelektronischer Detektor (Sensor) vorgesehen, welcher bevorzugt auch in der Lage ist, den Auftreffort eines Lichtstrahles eindimensional , bevorzugt jedoch zweidimensional auslesen zu können. Insbesondere ist der optoelektronische Detektor hinreichend schnell und erzeugt innerhalb kürzester Zeit ein Ausgangssignal oder ein verändertes Ausgangssignal, sobald Licht oder zusätzliches Licht auf diesen fällt.

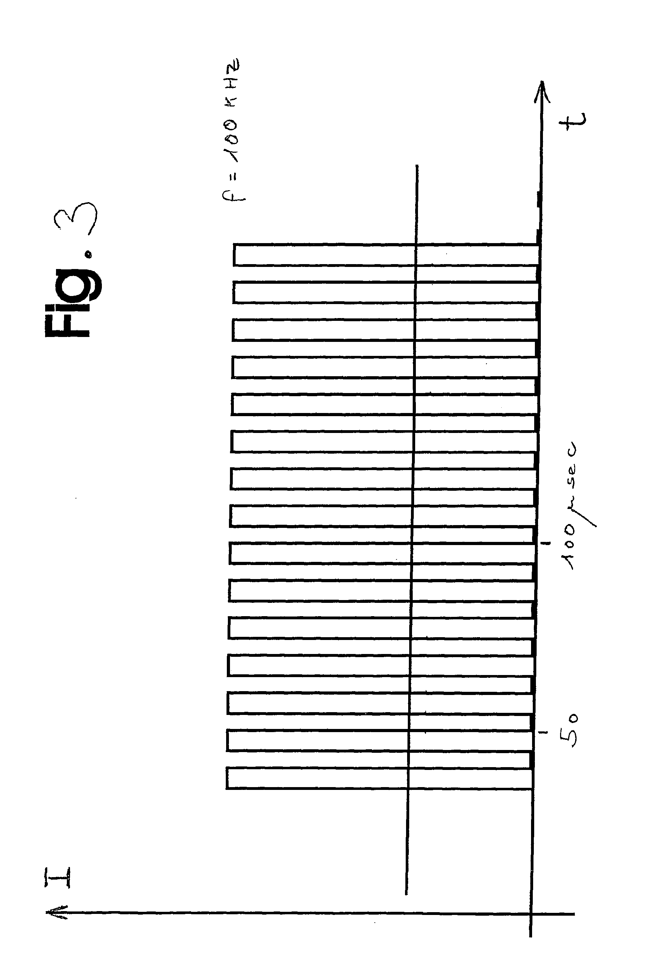

Gemäß der Erfindung wird die Bestimmung der obengenannten x- und y-Position dadurch erreicht, daß zunächst in Polarkoordinaten eine Radius-Winkel-Bestimmung durchgeführt wird (rho, phi), welche durch eine Elektronik oder einen Computer dann in eine x- und y-Positionsbestimmung umgerechnet wird. Der optoelektronische Detektor wird gemäß der Erfindung also Signale liefern, welche je nach dessen Position eine unterschiedliche, aber genau bestimmbare Phasenlage aufweisen, welche z.B. durch die ansteigende Flanke des gemessenen Impulses bestimmt ist, relativ zu am Laserstrahlgenerator vorgegebenen zyklisch wiederholten Zeit-Nullpunkten ts1 und ts2 (vgl. Fig. 2). Weiterhin ist gemäß der Erfindung auch die zeitliche Länge der durch den optoelektronischen Detektor gelieferten Signale variabel und hängt im wesentlichen von der radialen Entfernung des Detektors vom Zentrum Z ab. Sofern dafür gesorgt wird, daß die Empfangsfläche des Detektors senkrecht zu einem einfallenden Laserstrahl orientiert ist, kann daher aufgrund der zeitlichen Länge eines Impulses und dessen Phasenlage die Koordinierung des Meßpunktes nach Radius und Relativwinkel bezüglich eines Startwinkels vorgenommen werden.

Beispielsweise wird in Fig. 1 ein im radialen Abstand R1 positionierter Detektor 10 gezeigt, über den ein Laserstrahl verschwenkt wird, und zwar von der Anfangspositon 2 bis zur Endposition 4, in einer Höhe "z" . Solange der Detektor vom Laserstrahl beleuchtet wird, wird zumindest ein Signal abgegeben. Der Detektor ist jedoch so beschaffen, daß bevorzugt zwei Signale abgegeben werden können, welche Informationen über den Auftreffort des Laserstrahls nach zwei Koordinaten beinhalten. - Das während der Beleuchtung des Detektors 10 durch den Laserstrahl anstehende Zeit-Signal wird in Fig. 2 über die Zeit zwischen den Zeitpunkten t0 und t1 als Kanal A ("CH.A") gezeigt.

Wird der gleiche oder ein zweiter Detektor 20 in Position B mit dem radialen Abstand R2 positioniert, so kann der Laserstrahl diesen zwischen den Winkelpositionen 6 und 8 beleuchten, beginnend ab Position B, welche einen anderen Ordinatenwert aufweisen kann als denjenigen in Position A. Der zugehörige abgegebene elektrische Impuls ist in Fig. 2 im unteren Teil als Kanal - B-Signal ("CH.B") zwischen den Zeitpunkten t2 und t3 wiedergegeben. Die Zeitpunkte t2 und t3 liegen also in diesem Beispiel später als t0 und t1, die entsprechende zeitliche Differenz der Impulsmitten ist also ein Maß für den Winkel AZB. Weiterhin sind die Impulsbreiten ((t1 - t0) bzw. (t3 - t2)) unterschiedlich, bedingt durch die jeweils gleich große Meßfläche des Sensors und die unterschiedlichen radialen Abstände in den unterschiedlichen Meßpositionen. Bei fixiertem Sensor treten vergleichbare Pulse mit jedem Strahldurchlauf auf, so daß Daten von mehreren, z.B. 5 bis 70 Impulsen, zu einem Mittelwert zusammengefaßt werden können. Ein solcher Mittelwert hat dann eine höhere Präzision als nur ein einzelner Meßwert.

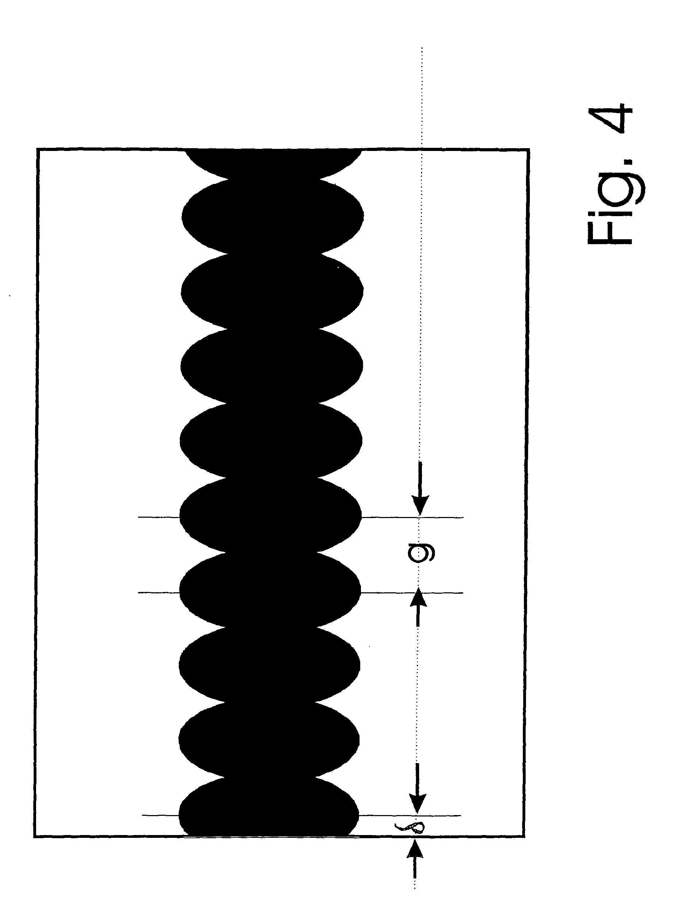

In einer abgewandelten Ausführungsform der Erfindung wird mit einem ebenfalls gleichförmig umlaufenden, jedoch pulsierenden Laserstrahl gearbeitet, so daß dieser während seiner Rotation mit einer Frequenz von z.B. 100 kHz laufend ein- und ausgeschaltet wird. Die Frequenz kann auch geschaltet werden, z.B. kann ein Umlauf des Lasers im Dauerstrichbetrieb erfolgen, danach ein Umlauf mit 100 kHz Impulsfrequenz, danach ein Umlauf mit 30 kHz, danach ein Umlauf mit 10 kHz, oder ähnlich, ohne daß die Umlaufbewegung in irgendeiner Weise modifiziert wird. In diesem Falle kann der Sensor also sowohl Impulszeiten erfassen, als auch die Anzahl einzelner Impulse durch einen nachgeschalteten Zähler oder Rechner auszählen lassen. Auch auf diese Weise wird ein Maß für die Zeit bereitgestellt, die der Laserstrahl zum Überstreichen des Sensors von einer Kante zur anderen benötigt hatte. Ein entsprechendes, idealisiertes impulsdiagramm wird in Fig. 3 gezeigt.
Mit einem auf diese Art modulierten, d.h. pulsierenden Laserstrahl ist es ebenfalls möglich, anstelle von ganzflächig wirkenden Detektoren oder Sensoren (sog. Position Sensing Diodes) solche mit vielen einzelnen Bildpunkten (Pixels) zu verwenden, sofern deren sensierende Fläche hinreichend groß dimensioniert ist. Der pulsierende Laserstrahl erzeugt dann ein perlschnurartiges bzw. streifenförmiges Muster auf dem Sensor, welches bis zum nächsten Umlauf ausgelesen und ausgewertet werden kann. Es ist ebenfalls möglich, kleiner dimensionierte pixelorientierte Sensoren zu verwenden, sofern eine verkleinernde Abbildungsoptik vorgesehen wird. In diesem Falle ist es zweckmäßig, den Laserstrahl über eine Mattscheibe von definierter Größe, z.B. 50 mm Breite, streichen zu lassen und das Bild der Mattscheibe samt des dort auftreffenden Laserlichtes mittels eine Linse von ca. 10 mm Brennweite auf einen pixelorientierten Sensor abzubilden. Es ist ersichtlich, daß die Anzahl der vom Sensor registrierten einzelnen Laserlichtimpulse ein Maß für die Zeit ist, welche der Laserstrahl zum Überstreichen der Mattscheibe jeweils benötigt hatte. - Ein Abbild der gepulsten Laserlichtpunkte auf dem Sensor wird in Fig. 4 gezeigt. Wie man erkennt, ist auch die Gitterkonstante (Bezugszeichen "g" in Fig. 4), bezogen auf die Dimension des Sensors, ein Maß für den radialen Abstand des Sensors vom Zentrum Z. Mit diesen Informationen kann die Präzision der Messung weiter verbessert werden. Ebenso kann aufgrund der Periodizität der registrierten Punkt-Folge relativ genau der Phasenwinkel "delta" bestimmt werden. Mit dieser Phasen-Information ist es daher möglich, die Flankenlage der Impulse wie z.B. in Fig. 2 gezeigt, und damit den gesuchten Azimutalwert einer zu vermessenden Position, genauer zu bestimmen. Zur Ermittlung der Größen "g" und "delta" können verschiedene mathematische Methoden herangezogen werden, zum Beispiel die der Fouriertransformation, insbesondere eine solche, die auf alle erfaßten Bildelemente angewendet wird.

Neben den Daten für seine Koordinaten (nach Radius und Azimutalwinkel) kann der Sensor somit gleichzeitig einen Nivellierungsweit (Höhenwert oder z-Komponente) an der jeweiligen Meßposition angeben, so daß mit einer geringen Anzahl von Systemkomponenten ein besonders preiswertes, dreidimensional messendes Meßgerät bereitgestellt wird.

## Patentansprüche

1. Positionsmeßgerät mit einem mit vorgegebener und konstanter Drehgeschwindigkeit umlaufenden Laserstrahl, wobei ein in einem Polarkoordinatensystem zentrierter Lasersender vorhanden ist, welcher zumindest einen umlaufenden Laserstrahl in eine im wesentlichen horizontal liegende Ebene emittiert und bezüglich eines Referenzwinkels ein Synchronsignal abzugeben gestattet, **dadurch gekennzeichnet,**
**daß** ein lichtempfindlicher Positionssensor vorhanden ist, welcher während einer Beleuchtung durch den umlaufenden Laserstrahl jeweils einen nach zeitlicher Länge und Phasenlage gekennzeichneten elektrischen Impuls abgibt, und die Phasenlage und die zeitliche Länge solcher Impulse ein Maß für die Winkellage bzw. die radiale Entfernung des Sensors im genannten Polarkoordinatensystem darstellt.

2. Positionsmeßgerät nach Anspruch 1, wobei der Lasersender einen gepulsten Laserstrahl abgibt, so daß anstelle eines einzelnen Impulses auf dem lichtempfindlichen Positionssensor ein Impulszug bestehend aus einer Mehrzahl einzelner Impulse erzeugt wird.

3. Positionsmeßgerät nach einem der vorherigen Ansprüche, wobei der lichtempfindliche Positionssensor als Positions-Sensierende Diode (PSD) oder als pixelorientierter Sensor in CMOS- oder CCD-Technologie ausgeführt ist.

4. Positionsmeßgerät nach einem der vorherigen Ansprüche, zur Verwendung bei der Vermessung von Werkzeugmaschinen.
